Europäisches Patentamt

European Patent Office

Office européen des brevets

(19)

(11) Veröffentlichungsnummer: **0 041 121**
**A1**

(12) # EUROPÄISCHE PATENTANMELDUNG

(21) Anmeldenummer: 81102873.7

(22) Anmeldetag: 15.04.81

(51) Int. Cl.³: **H 04 N 7/08**
**H 04 H 1/00**

(30) Priorität: 31.05.80 DE 3020787

(43) Veröffentlichungstag der Anmeldung:
09.12.81 Patentblatt 81/49

(84) Benannte Vertragsstaaten:
AT BE CH FR GB IT LI NL

(71) Anmelder: Blaupunkt-Werke GmbH
Robert-Bosch-Strasse 200
D-3200 Hildesheim(DE)

(72) Erfinder: Diepholz, Tilo, Dipl.-Ing.
Struckmannstrasse 7
D-3200 Hildesheim(DE)

(72) Erfinder: Freienstein, Bernd, Ing. grad.
Trockener Kamp 7
D-3200 Hildesheim(DE)

(72) Erfinder: Hansen, Jens, Dipl.-Ing.
Richard Hölscherstrasse 5
D-2120 Lüneburg(DE)

(72) Erfinder: Krüger, H.-Eckhard, Dr. Ing.
Ahstedter Strasse 6
D-3207 Harsum 3(DE)

(72) Erfinder: Schäfer, Thomas, Ing. grad.
Gabelstrasse 9
D-3209 Schellerten 3(DE)

(74) Vertreter: Eilers, Norbert, Dipl.-Phys.
Blaupunkt-Werke GmbH Robert-Bosch-Strasse 200
D-3200 Hildesheim(DE)

(54) Verfahren zum Übertragen von zusätzlichen Informationen.

(57) Bei einem Verfahren zum Übertragen von zusätzlichen Informationen während der Bildaustastlücke eines Fernsehsignals werden während der Bildaustastlücke als zusätzliche Informationen ein den zusätzlichen Informationen zugeordnetes Rahmenwort (4), das Datum (5), der Sendername (6) und eine Sendungskennung (8-15) in digital codierter Form übertragen.

Fig. 1

EP 0 041 121 A1

Croydon Printing Company Ltd.

# BLAUPUNKT-WERKE GMBH 32 HILDESHEIM, Robert-Bosch-Straße 200

PLI-Hi Gebranzig/TEX1-Li     —1—     29. Mai 1980
R.Nr. 1664

Stand der Technik

Die Übertragung von zusätzlichen Informationen in Fernsehsignalen erfolgt üblicherweise in der Weise, daß die zusätzlichen
Informationen in der Bildaustastlücke übertragen werden.

Rundfunkempfangsgeräte zum Empfang von in Fernsehsignalen übertragenen zusätzlichen Informationen weisen üblicherweise eine
Empfangsstufe mit einem Demodulator einer Datenabtrennstufe auf.

Die Verfahren zur Übertragung von zusätzlichen Informationen
sind hinsichtlich der Anzahl der Informationen, die während der
Bildaustastlücke übertragen werden können, verbesserungswürdig.

Darüber hinaus sind auch die Rundfunkempfangsgeräte zum Empfang
der in Fernsehsignalen während der Bildaustastlücke übertragenen
zusätzlichen Informationen hinsichtlich der Störsicherheit und
der Anwendungsmöglichkeiten verbesserungswürdig.

Die Erfindung und ihre Vorteile

Die Verfahren zum Übertragen von zusätzlichen Informationen
während der Bildaustastlücke eines Fernsehsignals lassen sich
gemäß der vorliegenden Erfindung dadurch verbessern, daß während
der Bildaustastlücke als zusätzliche Informationen ein den
zusätzlichen Informationen zugeordnetes Rahmenwort, das Datum,
der Sendername und eine Sendungskennung in digital codierter
Form übertragen werden.

Eine vorteilhafte Ausgestaltung der Erfindung besteht darin, daß
als zusätzliche Informationen auch die Sendungskennungen anderer
Sender in digital codierter Form übertragen werden.

**BLAUPUNKT-WERKE GMBH** 32 HILDESHEIM, Robert-Bosch-Straße 200

PLI-Hi Gebranzig/TEX1-Li        — 2 —                    29. Mai 1980
                                                        R.Nr. 1664

Eine vorteilhafte Weiterbildung der Erfindung, welche den Empfang und die Auswertung der zusätzlichen Informationen erleichtert, besteht darin, daß die zusätzlichen Informationen während vorbestimmter Zeilen in der Bildaustastlücke übertragen werden.

Vorteilhafte Ausgestaltungen der Erfindung bestehen darin, daß die zusätzlichen Informationen im FBAS-Signal übertragen werden oder im Tonkanal übertragen werden, indem ein Hilfsträger mit den zusätzlichen Informationen moduliert wird und das dabei gebildete Modulationsprodukt dem Tonträger aufmoduliert wird.

Ein Rundfunkempfangsgerät zum Empfang von in Fernsehsignalen übertragenen zusätzlichen Informationen mit einer Empfangsstufe und einem Demodulator, dem eine Datenabtrennstufe zur Abtrennung der zusätzlichen Informationen nachgeschaltet ist, läßt sich hinsichtlich der Störsicherheit und Anwendungsmöglichkeiten gemäß der vorliegenden Erfindung dadurch wesentlich verbessern, daß die Datenabtrennstufe zur Auswertung von zusätzlichen Informationen, die während der Bildaustastlücke übertragen werden, wobei ein den zusätzlichen Informationen zugeordnetes Rahmenwort, das Datum, der Sendername und eine Sendungskennung in digital codierter Form als zusätzliche Informationen übertragen werden, eine Vergleichsstufe zum Vergleich der der Datenabtrennstufe entnehmbaren zusätzlichen Informationen mit gespeicherten Rahmenworten aufweist und die Vergleichsstufe die Auswertung der zusätzlichen Informationen bei Erkennung eines Rahmenwortes durch die Vergleichsstufe steuert.

Eine vorteilhafte Weiterbildung der Erfindung besteht darin, daß die Vergleichsstufe bei Erkennung eines Rahmenwortes eine der Datenabtrennstufe nachgeschaltete programmierbare Schaltstufe zur Auswertung der zusätzlichen Informationen durchschaltet.

# BLAUPUNKT-WERKE GMBH 32 HILDESHEIM, Robert-Bosch-Straße 200

PLI-Hi Gebranzig/TEX1-Li       -3-                    29. Mai 1980
                                                      R.Nr. 1664

Gemäß vorteilhafter Ausgestaltung der Erfindung läßt sich eine
einfache und zuverlässige Erkennung der zusätzlichen Informationen dadurch erzielen, daß die Datenabtrennstufe mit einer
Impulsabtrennstufe zur Ableitung von Taktsignalen aus den
Synchronsignalen des Fernsehsignals verbunden ist, die Datenabtrennstufe mit den der Impulsabtrennstufe entnehmbaren Signalen von der Impulsabtrennstufe für die Dauer einer ersten
Torzeit durchgeschaltet wird und die programmierbare Schaltstufe
von der Vergleichsstufe bei Erkennung eines Rahmenwortes für die
Dauer einer zweiten Torzeit durchgeschaltet wird, wozu beispielsweise der Impulsabtrennstufe eine einstellbare Impulsauswahlstufe nachgeschaltet ist und die Impulsauswahlstufe zur
Ableitung der Taktsignale aus der Impulsabtrennstufe entnehmbaren vorbestimmten Synchronsignalen des Fernsehsignales einstellbar ist, wobei der Impulsabtrennstufe Bildsynchronimpulse
und Zeilensynchronimpulse entnehmbar sind und die Impulsauswahlstufe zur Ableitung der Taktsignale aus der Impulsabtrennstufe entnehmbaren vorbestimmten Zeilensynchronimpulsen einstellbar ist.

Eine vorteilhafte Ausgestaltung der Erfindung, welche die Auswertung von im Bildsignal übertragenen zusätzlichen Informationen ermöglicht, besteht darin, daß die Datenabtrennstufe zur
Abtrennung der zusätzlichen Informationen aus dem FBAS-Signal
einer Bilddemodulatorstufe nachgeschaltet ist.

Eine für die Auswertung von im Tonkanal übertragenen zusätzlichen Informationen geeignete vorteilhafte Ausgestaltung der
Erfindung besteht darin, daß die Datenabtrennstufe zur Abtrennung der zusätzlichen Informationen aus dem Ton-Signal einer
Tondemodulatorstufe nachgeschaltet ist.

**BLAUPUNKT-WERKE GMBH** 32 HILDESHEIM, Robert-Bosch-Straße 200

PLI-Hi Gebranzig/TEX1-Li     —4—     29. Mai 1980
R.Nr. 1664

Die Vorteile der vorliegenden Erfindung liegen insbesondere darin, daß durch die Übertragung von Sendernamen, Sendungskennung und Datum, die für die jeweilige ausgestrahlte Sendung charakteristischen Kenndaten mit ausgestrahlt werden, so daß auf der Seite des Empfängers eine einfache Idenfikation der Sendungen und Sender möglich ist. Die Ausstrahlung eines den zusätzlichen Informationen zugeordneten Rahmenwortes gewährleistet, daß die Kenndaten wie Datum, Sendername und Sendungskennung nicht mit anderen zusätzlichen Informationen, die ebenfalls im Fernsehsignal übertragen werden, verwechselt werden.

Durch die Aussendung der Sendungskennungen aller Sender durch jeden dieser Sender ist bei Empfang jedes dieser Sender eine Auswertung wie beispielsweise eine Überwachung der übrigen Sender bei Empfang jedes dieser Sender möglich.

Die Übertragung der zusätzlichen Informationen im FBAS-Signal oder im Tonkanal ermöglicht eine einfache Umrüstung von Sendern und Empfängern für die Aussendung sowie den Empfang und die Auswertung der zusätzlichen Informationen.

Zeichnung

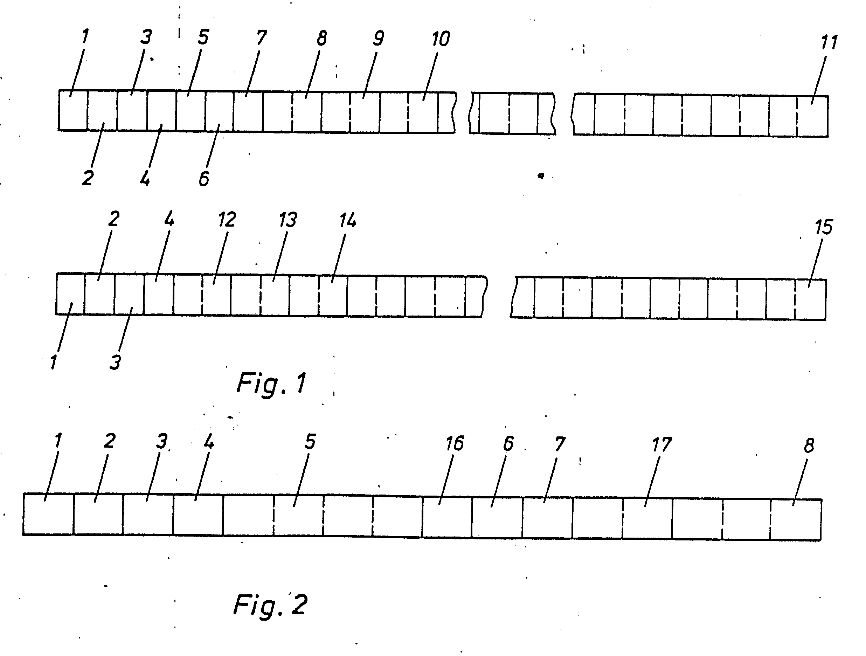

Die Erfindung wird nachfolgend an den Figuren 1 bis 3 näher erläutert. In den Figuren 1 und 2 sind erfindungsgemäße Codierungssysteme, wie sie von den Sendern zur Übertragung der zusätzlichen Informationen verwendet werden, dargestellt.

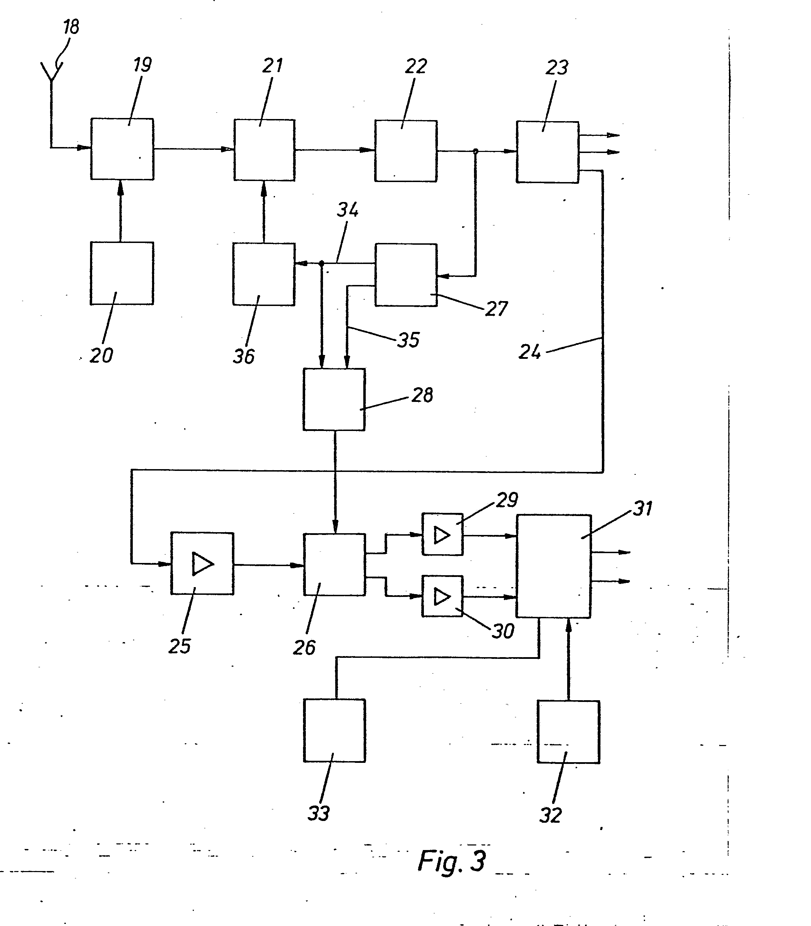

Figur 3 zeigt den Aufbau eines erfindungsgemäß ausgebildeten Rundfunkempfangsgerätes zum Empfang und zur Auswertung von zusätzlichen Informationen, die nach dem erfindungsgemäßen Verfahren übertragen werden.

BLAUPUNKT-WERKE GMBH 32 HILDESHEIM, Robert-Bosch-Straße 200

PLI-Hi Gebranzig/TEX1-Li        -5-                    29. Mai 1980
                                                      R.Nr. 1664

In der Figur 1 ist ein Codierungssystem dargestellt, bei dem erfindungsgemäß jeder Sender die Sendungskennungen der anderen Sender mit überträgt. Aufgrund der Vielzahl der übertragenen Sendungskennungen besteht der in der Figur 1 dargestellte Sendungscode aus zwei Datenzeilen von einer Zeilenlänge, die beispielsweise entweder als Block jede Sekunde oder einzeln halbsekündlich gesendet werden.

Um die Verwendung von beispielsweise mit Videotextdecoder versehenen Fernsehempfangsgeräten zusätzlich für die Auswertung der erfindungsgemäß übertragenen zusätzlichen Informationen zu nutzen, ist es von Vorteil, die in den Figuren 1 und 2 dargestellten Datensätze hinsichtlich ihrer Reihenlänge und Wortstruktur videotextkompatibel zu gestalten.

Die in der Figur 1 dargestellten Datenzeilen beginnen beide mit Taktsynchronworten 1 und 2, die eine 1,0-Bitfolge von 3,47 MHz aufweisen. Mit diesen Taktsynchronworten läßt sich die Taktsynchronisation von Decodern in Empfangsgeräten sowie die Datenreihenerkennung auslösen.

Den Taktsynchronworten 1 und 2 folgt in dem in der Figur 2 dargestellten Ausführungsbeispiel zunächst ein Videotextrahmenwort 3, welches eigentlich nur zur Einleitung einer Videotextübertragung dient, jedoch im Rahmen der vorliegenden Erfindung dazu genutzt werden kann, mit einem Fernsehempfangsgerät verbundene Videotextdecoder zusätzlich zur Decodierung der erfindungsgemäß übertragenen zusätzlichen Informationen zu nutzen, indem die Videotextdecoder durch das Videotextrahmenwort aktiviert werden.

BLAUPUNKT-WERKE GMBH 32 HILDESHEIM, Robert-Bosch-Straße 200

PLI-Hi Gebranzig/TEX1-Li       — 6 —       29. Mai 1980
                                           R.Nr. 1664

Dem Videotextrahmenwort 3 folgt das Rahmenwort 4, welches den gemäß dem erfindungsgemäßen Verfahren übertragenen zusätzlichen Informationen zugeordnet ist. Das Rahmenwort 4 leitet die Übertragung der diesen zugeordneten nachfolgenden zusätzlichen Informationen ein und dient dazu, die Schaltstufen in Empfangsgeräten zur Auswertung der dem Rahmenwort 4 folgenden zusätzlichen Informationen zu aktivieren.

Dem Rahmenwort 4 folgt als erste zusätzliche Information das Datum 5 des Tages, an dem die Aussendung erfolgt. Dem Datum 5 folgt die Senderkennung 6 der Sendeanstalt, die die zusätzlichen Informationen ausstrahlt. Ferner wird eine Regionalsenderkennung 7 ausgestrahlt, die den jeweiligen Regionalsender der Sendeanstalt angibt, über den die zusätzlichen Informationen abgestrahlt werden.

Der Senderkennung 6 und der Regionalsenderkennung 7 folgen die Sendungskennungen 8 bis 15, die die Sendungen der Programme kennzeichnen. Die Sendungskennungen, die in der ersten Datenzeile gemäß der Figur 1 nicht unterzubringen sind, werden in der zweiten Datenzeile übertragen. Die zweite Datenzeile weist deshalb lediglich die Taktsynchronworte 1 und 2, das Videotextrahmenwort 3 und das Rahmenwort 4, denen die Sendungskennung 12, 13, 14 und 15 unmittelbar folgen, auf.

Bei dem in der Figur 2 dargestellten Codierungssystem genügt eine Datenzeile zur Übertragung der zusätzlichen Informationen. Diese Datenzeile beginnt ebenfalls mit zwei Taktsynchronworten 1 und 2, dem Videotextrahmenwort 3 und dem den folgenden zusätzlichen Informationen zugeordneten Rahmenwort 4. Dem Rahmenwort 4 folgt das Datum 5 der Aussendung sowie eine Nationen-Senderkennung 16. Mit dieser Nationen-Senderkennung 16 wird die Information über die Nation, in welcher sich der empfangene Sender befindet, übertragen.

**BLAUPUNKT-WERKE GMBH** 32 HILDESHEIM, Robert-Bosch-Straße 200

PLI-Hi Gebranzig/TEX1-Li    - 7 -      29. Mai 1980
                                                R.Nr. 1664

Der Nationen-Senderkennung 16 folgt die Senderkennung 6, die
Regional-Senderkennung 7 sowie eine Subregional-Senderkennung
17, die der genauen Identifizierung des Senders dient. Als
letzte zusätzliche Information enthält die in der Figur 2
dargestellte Datenzeile die Sendungskennung 8. Diese Sendungskennung 8 ist der jeweiligen Sendung zugeordnet, die der Sender
ausstrahlt.

Das in der Figur 2 dargestellte Codierungssystem weist gegenüber
dem in der Figur 1 dargestellten Codierungssystem einige Vorteile auf.

So benötigen die Sender der verschiedenen Programme keine Kommunikation untereinander, um die Sendungs-Nummern der anderen
Sendeanstalten zu ermitteln, zu codieren und zu senden. Jede
Sendergruppe einer Sendeanstalt sendet je nach Programmart -
also Gemeinschaftsprogramm, Regionalprogramm oder Subregionalprogramm - nur seine eigene Kennung.

Darüber hinaus verringert sich der Zeit- und Platzbedarf zur
Übertragung der zusätzlichen Informationen sowie der empfängerseitige Speicherplatzbedarf zur Auswertung der zusätzlichen
Informationen.

Das System ist flexibel bezüglich Senderanzahl und Sendungs-
nummern.

Durch die Einführung einer subregionalen Kennung wird die Struktur des Codes wesentlich verbessert, d. h. die Unterscheidung
der einzelnen Subregionen braucht nicht mehr über die Sendungskennung vorgenommen werden.

**BLAUPUNKT-WERKE GMBH** 32 HILDESHEIM, Robert-Bosch-Straße 200

PLI-Hi Gebranzig/TEX1-Li        —8—           29. Mai 1980
                                              R.Nr. 1664

In der Figur 3 ist ein erfindungsgemäß aufgebautes Rundfunkempfangsgerät zum Empfang und zur Auswertung von in erfindungsgemäßer Weise übertragenen zusätzlichen Informationen dargestellt.

Die Fernsehsignale, in denen die zusätzlichen Informationen übertragen werden, gelangen von der Antenne 18 in den mittels des Abstimmaggregats 20 einstellbaren Tuner 19. Die dem Tuner 19 entnehmbaren zwischenfrequenten Signale gelangen über den Zwischenfrequenzverstärker 21 in die Bilddemodulatorstufe 22, der das FBAS-Signal entnehmbar ist. Dem Demodulator 22 ist die Videoendstufe 23 nachgeschaltet. Der Videoendstufe 23 ist über den Signalweg 24 und den Verstärker 25 die Datenabtrennstufe 26 zur Abtrennung der im Ausgangssignal des Verstärkers 23 enthaltenen zusätzlichen Informationen nachgeschaltet. Von der Datenabtrennstufe 26 werden über den Verstärker 29 Taktimpulse und über den Verstärker 30 die zusätzlichen Informationen an die programmierbare Schaltstufe 31 zur Auswertung der zusätzlichen Informationen geführt. Die programmierbare Schaltstufe 31 ist mit einer Eingabetastatur 32 und einer Anzeige 33 verbunden.

Aus dem FBAS-Signal werden mit der Impulsabtrennstufe 27 die im FBAS-Signal enthaltenen Zeilen- und Bildsynchronimpulse gewonnen. Die Zeilensynchronimpulse gelangen über den Signalweg 34 und die Bildsynchronimpulse über den Signalweg 35 in die Impulsauswahlstufe 28. Die Zeilensynchronimpulse werden ferner über die Taststufe 36 zur getasteten Regelung des Zwischenfrequenzverstärkers 21 genutzt.

Mit der Impulsauswahlstufe 28 werden aus vorbestimmten Zeilensynchronimpulsen aus der Bildaustastlücke Taktsignale zur Steuerung der Datenabtrennstufe 26 gewonnen.

**BLAUPUNKT-WERKE GMBH** 32 HILDESHEIM, Robert-Bosch-Straße 200

PLI-Hi Gebranzig/TEX1-Li          - 9 -          29. Mai 1980
                                                 R.Nr. 1664

Mit der auf vorbestimmte Synchronsignale einstellbaren Impulsauswahlstufe 28 wird die Datenabtrennstufe 26 aufgetastet, so
daß diese nur auf die in den zugeordneten Zeilen übertragenen
zusätzlichen Informationen anspricht.

Zur Auswertung der zusätzlichen Informationen weist die Datenabtrennstufe 26 eine in der Figur 3 nicht näher dargestellte
Vergleichsstufe auf, in der die der Datenabtrennstufe entnehmbaren zusätzlichen Informationen mit abgespeicherten Rahmenworten verglichen werden, so daß die Vergleichsstufe, die der
Datenabtrennstufe 26 nachgeschaltete, programmierbare Schaltstufe 31 zur Auswertung der zusätzlichen Informationen bei
Übereinstimmung der in der Vergleichsstufe abgespeicherten
Rahmenworte mit den mit den zusätzlichen Informationen übertragenen und den zusätzlichen Informationen zugeordneten Rahmenworte auftastet. Dazu kann die Vergleichsstufe beispielsweise
ein Bestandteil der programmierbaren Schaltstufe 31 sein. Um bei
einem größtmöglichen Anwendungsbereich der programmierbaren
Schaltstufe einen einfachen Aufbau derselben zu ermöglichen,
ist es von Vorteil, diese als Mikroprozessor auszubilden.

Die Vorteile der vorliegenden Erfindung liegen insbesondere
darin, daß sich mit erfindungsgemäßen Empfangsgeräten andere
Geräte wie beispielsweise Videorecorder steuern lassen, so daß
sich vorbestimmte Sendungen nach Programmieren der entsprechenden Sendungs-Nummer an der programmierbaren Schaltstufe automatisch aufzeichnen lassen, wobei auch bei Programmänderungen
eine zuverlässige Aufzeichnung der gewünschten Sendungen aufgrund der erfindungsgemäß stets ausgestrahlten Sendungskennungen
gewährleistet ist.

# BLAUPUNKT-WERKE GMBH 32 HILDESHEIM, Robert-Bosch-Straße 200

29. Mai 1980
R.Nr. 1664

## Verfahren zum Übertragen von zusätzlichen Informationen

_ 7 _

## Ansprüche

1. Verfahren zum Übertragen von zusätzlichen Informationen während der Bildaustastlücke eines Fernsehsignals, dadurch gekennzeichnet, daß während der Bildaustastlücke als zusätzliche Informationen ein den zusätzlichen Informationen zugeordnetes Rahmenwort, das Datum, der Sendername und eine Sendungskennung in digital codierter Form übertragen werden.

2. Verfahren nach Anspruch 1, dadurch gekennzeichnet, daß als zusätzliche Informationen auch die Sendungskennungen anderer Sender in digital codierter Form übertragen werden.

3. Verfahren nach einem der Ansprüche 1 und 2, dadurch gekennzeichnet, daß die zusätzlichen Informationen während vorbestimmter Zeilen in der Bildaustastlücke übertragen werden.

4. Verfahren nach einem der Ansprüche 1 bis 3, dadurch gekennzeichnet, daß die zusätzlichen Informationen im FBAS-Signal übertragen werden.

5. Verfahren nach einem der Ansprüche 1 bis 3, dadurch gekennzeichnet, daß die zusätzlichen Informationen im Tonkanal übertragen werden, indem ein Hilfsträger mit den zusätzlichen Informationen moduliert wird und das dabei gebildete Modulationsprodukt dem Tonträger aufmoduliert wird.

BLAUPUNKT-WERKE GMBH 32 HILDESHEIM, Robert-Bosch-Straße 200

PLI-Hi Gebranzig/TEX1-Li        - 2 -                  29. Mai 1980
                                                      R.Nr. 1664

6.  Rundfunkempfangsgerät zum Empfang von in Fernsehsignalen
    übertragenen zusätzlichen Informationen mit einer Empfangsstufe und einem Demodulator, dem eine Datenabtrennstufe zur
    Abtrennung der zusätzlichen Informationen nachgeschaltet
    ist, dadurch gekennzeichnet, daß die Datenabtrennstufe (26)
    zur Auswertung von zusätzlichen Informationen, die während
    der Bildaustastlücke übertragen werden, wobei ein den
    zusätzlichen Informationen zugeordnetes Rahmenwort, das
    Datum, der Sendername und eine Sendungskennung in digital
    codierter Form als zusätzliche Informationen übertragen
    werden, eine Vergleichsstufe zum Vergleich der der Daten-
    abtrennstufe (26) entnehmbaren zusätzlichen Informationen
    mit gespeicherten Rahmenworten aufweist und die Vergleichsstufe die Auswertung der zusätzlichen Informationen bei
    Erkennung eines Rahmenwortes durch die Vergleichsstufe
    steuert.

7.  Rundfunkempfangsgerät nach Anspruch 6, dadurch gekennzeichnet, daß die Vergleichsstufe bei Erkennung eines
    Rahmenwortes eine der Datenabtrennstufe (26) nachgeschaltete programmierbare Schaltstufe (31) zur Auswertung der
    zusätzlichen Informationen durchschaltet.

8.  Rundfunkempfangsgerät nach Anspruch 7, dadurch gekennzeichnet, daß die Datenabtrennstufe (26) mit einer Impulsabtrennstufe (27) zur Ableitung von Taktsignalen aus den
    Synchronsignalen des Fernsehsignals verbunden ist, die
    Datenabtrennstufe (26) mit den der Impulsabtrennstufe (27)
    entnehmbaren Taktsignalen für die Dauer einer ersten Torzeit durchgeschaltet wird und die programmierbare Schaltstufe (31) von der Vergleichsstufe bei Erkennung des Rahmenwortes zu Auswertung der zusätzlichen Informationen für
    eine zweite Torzeit durchgeschaltet wird.

9.  Rundfunkempfangsgerät nach Anspruch 8, dadurch gekennzeichnet, daß der Impulsabtrennstufe (27) eine einstellbare
    Impulsauswahlstufe (28) nachgeschaltet ist und die Impulsauswahlstufe (28) zur Ableitung der Taktsignale aus der
    Impulsabtrennstufe (27) entnehmbaren vorbestimmten Synchronsignalen des Fernsehsignals einstellbar ist.

10. Rundfunkempfangsgerät nach Anspruch 9, dadurch gekennzeichnet, daß der Impulsabtrennstufe (27) Bildsynchronimpulse und Zeilensynchronimpulse entnehmbar sind und die
    Impulsauswahlstufe (28) zur Ableitung der Taktsignale aus
    der Impulsabtrennstufe (27) entnehmbaren vorbestimmten
    Zeilensynchronimpulsen einstellbar ist.

11. Rundfunkempfangsgerät nach einem der Ansprüche 6 bis 10,
    dadurch gekennzeichnet, daß die Datenabtrennstufe (26) zur
    Abtrennung der zusätzlichen Informationen aus dem FBAS-
    Signal einer Bilddemodulatorstufe (22) nachgeschaltet ist.

12. Rundfunkempfangsgerät nach einem der Ansprüche 6 bis 10,
    dadurch gekennzeichnet, daß die Datenabtrennstufe (26) zur
    Abtrennung der zusätzlichen Informationen aus dem Ton-
    Signal einer Tondemodulatorstufe nachgeschaltet ist.

Fig. 1

Fig. 2

2/2

*Fig. 3*

| Europäisches Patentamt | EUROPÄISCHER RECHERCHENBERICHT | | Nummer der Anmeldung EP 81102873.7 |
|---|---|---|---|

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | DE - B2 - 2 301 122 (SIEMENS)<br>* Fig. 1; Spalte 1, Zeilen 4-9; Spalte 3, Zeilen 24-28, 34-38; Spalte 4, Zeilen 27-30; Spalte 5, Zeilen 4-14 *<br>-- | 1-3 | H 04 N 7/08<br>H 04 H 1/00 |
| | DE - B - 1 762 271 (RCA)<br>* Spalte 2, Zeilen 41-66 *<br>-- | 1,2 | |
| X | FUNK-TECHNIK, 34. Jahrgang, Nr. 8/1979, München<br>ING. ALBRECHT ALTMANN "Vorschläge für die Kennung von Fernseh-Programmen",<br>Seiten T 383-T385<br>* Seite T 384, rechte Spalte, Zeilen 1-8 von unten - Seite T 385, linke Spalte, Zeilen 1-6; Seite T 385, mittlere Spalte, Zeilen 21-26, 46-52, Zeile 59 - rechte Spalte, Zeile 2; Bild 4 *<br>-- | | **RECHERCHIERTE SACHGEBIETE (Int. Cl.³)**<br><br>H 04 N 5/00<br>H 04 N 7/00<br>H 04 N 9/00<br>H 04 H 1/00 |
| | DE - A1 - 2 614 188 (LICENTIA)<br>* Fig. 1; Seite 1, Ansprüche 1, 4-6; Seite 2, Anspruch 9 *<br>-- | 1,6,7 | |
| | DE - B2 - 2 454 227 (BLAUPUNKT)<br>* Spalte 2, Zeilen 43-50; Fig. 5; Spalte 6, Zeile 54 - Spalte 7, Zeile 11 *<br>-- | 5-8, 12 | **KATEGORIE DER GENANNTEN DOKUMENTE**<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | DE - B2 - 2 350 477 (STANDARD)<br>* Fig. 1; Spalte 1, Zeilen 4-16; Spalte 2, Zeilen 34-59 *<br>-- | 4 | |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 17-08-1981 | BENISCHKA |

## EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | DE – A1 – 2 909 873 (TELEDIFFUSION) <br><br> * Fig. 1; Seite 13, vorletzte Zeile – Seite 14, 2. Absatz * <br><br> ──── | 11 | |
| | | | **RECHERCHIERTE SACHGEBIETE (Int. Cl.³)** |

EPA Form 1503.2 06.78